# EUROPEAN PATENT APPLICATION

(11) **EP 2 174 552 A1**
(43) Date of publication of application: **14.04.2010**
(21) Application number: 08388036.9
(22) Date of filing: 09.10.2008
(51) Int. Cl.: A22C 29/02

(54) **A method of processing shrimps and a shrimp processing plant**

(71) Applicant: Cabinplant A/S, 5683 Haarby (DK)
(72) Inventor: Hansen, Henning Ingemann, 5220 Odense SØ (DK)
(74) Representative: Tonnesen, Bo

(57) **Abstract**

A method of preparing a shrimp (10) defining a head part (14), a tail part (12) and a transition between the head and tail parts. The method comprise providing a working surface for receiving the shrimp, an optical measurement unit for generating a digital representation of the shrimp and a separation device (20) having a first (24) and a second surface (28) defining a first (26) and second edge (30), respectively. The separation device defining an insertion mode in which the first and second edges are positioned juxtaposed, and a separation mode in which the first and second edges are separated. The method further comprise positioning the first and second edges above the transition on the basis of the digital representation, inserting the first and second edges into the transition while the separation device being in the insertion mode, and separating the head and tail parts of the shrimp by changing the separation device to the separation mode.

## Description

The present invention relates to a method and a system for processing shrimps, in particular warm water shrimps.

In the foodstuffs industry there is a need for automated processes for separating the non-consumable head part of the shrimp from the consumable body part of the shrimp. A large number of shrimps are typically boiled and thereafter delivered to a rinsing station for separating the head part and the tail part of the shrimp. The head part, which constitutes the head and gills of the shrimp, is either disposed or sold for a low price. The tail part of the shrimp is considered to be a highly valuable food product and is consequently sold for a high price. Traditionally, the head part and the tail part of the shrimp are separated by using a manual process. Two common methods exist for the above purpose. The first manual method involves gripping the head part by one hand and gripping the body part by the other hand and removing the head from the body by a twisting motion. In the second manual method the body part is gripped by one hand and the head is removed by using the thump of the same hand. Both methods are monotonous and it has, therefore, been a long time need for technologies for automating the step of removing the head from the tail of the shrimp.

In the prior art a successful technology for preparing shrimp is described in the United States patent US 7,357,706 assigned to the applicant company of the present invention. US 7,357,706 describes a technology for separating the consumable meat parts and the non-consumable shell parts of the shrimp by boiling the shrimp in a liquid and using a roller arraignment for the separation of the head part and the tail part of the shrimp. The above technology will efficiently remove the head part and all shell parts of the shrimp. It may, however, in many circumstances be advisable to let some parts of the shell remain with the tail of the shrimp even after processing. Some popular ways of preparing shrimp for consumption involve keeping the tail fins of the shell intact and attached to the tail part of the shrimp. In many cultures, shrimps are consumed without the use of knife and fork or similar. For the consumer it can be easier and significantly more hygienic to grab the substantially rigid tail fins of the shell instead of the slippery meat part during consumption. The tail fins of the shell will, however, normally not be consumed and may be disposed by the consumer after consumption of the meat of the shrimp.

It is, therefore, an object according to the present invention to provide reliable, fast and efficient technologies for separating the head part from the body part of a shrimp while keeping the shell of the shrimp substantially intact.

Due to the difference in size and anatomy of different shrimps, it has been difficult to provide automated technologies for efficiently finding the transition between the head part and the tail part. For the further processing of the shrimp tail, it is undesirable if any parts of the head remain with the tail part. Due to the high price of shrimp meat, it may be equally undesirable if any part of the consumable tail part is disposed together with the head part. Therefore, it is a further object according to the present invention to provide technologies for identifying the transition between the head part and the tail part of the shrimp. It is further important that the head and tail parts are properly separated to avoid any shrimp heads to be further processed as tails and eventually shipped to a customer. Yet a further object of the present invention is, therefore, to provide technologies for separating and sorting the head part and the tails part such that the head part may be disposed and the tail part is further processed.

The above need and the above object together with numerous other objects and features will be evident from the below detailed description of an method according to a first aspect of the present invention for preparing a shrimp, the shrimp defining a head part, a tail part and a transition between the head and tail parts, the method comprising:
providing a working surface being a substantially flat and horizontal surface for receiving the shrimp,
providing an optical measurement unit located above the working surface for generating a digital representation of the shrimp on the working surface,
providing a separation device being movably located above the working surface having a first separation surface and a second separation surface, the first and second separation surfaces defining a first edge and second edge, respectively, the first and second edges being parallel in relation to the working surface, the separation device defining:
   an insertion mode in which the first and second edges are positioned juxtaposed in relation to each other and the first and second separation surfaces are substantially perpendicular in relation to the working surface, and
   a separation mode in which the first and second surfaces and edges are separated,
providing a processing unit for receiving the digital representation and for controlling the separation device,
generating the digital representation of the shrimp by using the optical measurement unit,
positioning the first and second separation edges above the transition between the head and tail parts of the shrimp on the basis of the digital representation by using the processing unit,
inserting the first and second separation edges into the transition between the head and tail parts of the shrimp while the separation device being in the insertion mode, and
separating the head and tail parts of the shrimp by changing the separation device from the insertion mode to the separation mode.

In the present context it has surprisingly been found out that by using advanced digital camera and computer technologies in combination with robotics and mechanics, the transition between the head part and the body part of the shrimp may be indentified and severed for substantially different shrimp anatomies. A suitable number of shrimps may be delivered simultaneously to the working surface. The shrimps may be fresh, frozen or boiled. Preparing in this context means the head part of the shrimp is separated from the tail part of the shrimp. After preparation, the shrimp may be further treated, such as boiled, frozen, packaged or any other suitable treatment, before being consumed. The working surface is preferably made large for a large number of shrimp to fit. The shrimps must be placed on the working surface in one layer for the optical measurement unit to detect and evaluate each shrimp and for the separation device to act on one single shrimp and not interfering with the surrounding shrimps. Optionally, some space is provided between each shrimp to simplify detection of each shrimp. Alternatively, the working surface may be a small surface providing enough space for a single shrimp only. The shrimp must then be individually placed on the working surface and individually removed after treatment. Additionally, the working surface should have a colour different from the colour of the shrimp for the shrimp to be visually distinguishable by the optical measurement unit.

The optical measurement unit is preferably a digital camera such as a CCD camera or the like and set up to visually observe the whole working surface. Alternatively, a laser tracking system may be used. The digital representation generated by the optical measurement unit is sent to a processing unit, which may constitute a personal computer or similar running an appropriate algorithm. The digital representation is used by the processing unit to determine the exact position of the transition between the head part and the tail part of the shrimp as well as the orientation of the shrimp on the working surface. The method of determining the position of the transition between the head part and the tail part of the shrimp may differ depending on the species of shrimp and may for some embodiments involve determining the position of the front leg of the shrimp and thereby deducing the position of the transition between the head part and the tail part of the shrimp.

In the preset context digital representation also includes any analogous representation such as photographic film, which is later converted to a digital form for being processed by a computer.

The separation device may preferably comprise an industrial robot having a working envelop in the space above the working surface. The first separation surface and the second separation surface constitute blades, which may for some embodiments be sharpened. The edges of the separation surfaces may for different embodiments be either sharp or blunt depending on the intended species of the shrimp. The separation surfaces and the edges are in the insertion mode held juxtaposed in order to form a single blade and a single edge. When the digital representation has been generated, a shrimp is determined and evaluated on the working surface and the separation device is moved to a position above the shrimp and rotated for the edge to coincide with the transition. The transition between the head part of the shrimp and the tail part of the shrimp is typically defined by a joint in the shrimp shell. If more than one shrimp is present on the working surface the processing unit determines a suitable shrimp, e.g. by evaluating the time for the rotational and translatory movements needed for achieving the correct position since time may be critical for the efficiency of the method.

The head part and the tail part are separated by allowing the single edge, i.e. the edge of the first and second surface when in the insertion mode, sever the transition between the head part and the tail part of the shrimp, i.e. the single edge and the separation surfaces will be allowed to penetrate the transition between the head part and the tail part of the shrimp at least partly.

To complete separation, the first and second surface will separate e.g. by activating an actuator in the separation device. This will cause the separation device to assume the separation mode. The head part and the tail part will thereby separate and be propelled in opposite directions.

In the above context the head part represents the substantially non-consumable part of the shrimp, and the tail part represents the substantially consumable part of the shrimp. It may be contemplated that the shrimp may be divided into additional parts such as body part and a fin part etc.

In a further embodiment of the present invention, the first and/or second edges are blunt. In many species of shrimp the head part of the shrimp and the body part of the shrimp are only connected by a relatively thin shell and/or flesh part. For such species there is no need for a precise cut and thus a blunt edge may be used for the first and/or separation surfaces. By blunt edge is meant an edge having rigidity high enough to withstand repeated insertion into a hard shrimp shell over a long time periods. By using blunt edges instead of sharp edges, damages to the edges may be avoided to a significantly larger extend than by using sharp edges. Since the shell of the shrimp is very hard and very difficult to penetrate by cutting, it has proven more efficient to penetrate the shell by crushing it. The shell may additionally contain particles such as sand particles and the like, which are likely to damage a sharp edge. A blunt edge is significantly less prone to such damage. A blunt edge must not be sharpened. Sharp edges must be regularly sharpened since sharp edges will become damaged after some time of usage. Sharpening requires some time, in which the separation device may not be used. For some embodiments the first edge may be blunt and the second edge sharp, or vice versa.

In a further embodiment of the present invention, the working surface may comprise a conveyor belt, or alternatively a rotating disc, or yet alternatively a vibration table. By arranging the working surface as a conveying belt, the shrimp may be continuously fed to the separation device. The conveyor belt may e.g. comprise a continuous flexible belt, or alternatively a plurality of substantially rigid compartments, each constituting a working surface. Alternatively, a conveyor chain may be used. Alternatively, a rotating conveyor disc or a vibrating table is used.

In a further embodiment of the present invention, the separation device comprises a suction device for disposing the head part by suction, or alternatively the head part is removed by a mechanical gripping unit or a pneumatic unit. A suction device such as a tube connected to a low pressure source such as a vacuum pump may be mounted on the separation device at the position of the head of the shrimp to directly dispose the head after separation. The suction device may subject the head part to an intense airflow and cause the head to be propelled towards a receptacle for simple disposal. Alternatively, the head part is grabbed by a gripping unit and transported away from the tail part. Yet alternatively, the head part is blown away by the use of a pneumatic unit such as a compressed air unit. Further embodiments may include a corresponding suction device, gripping unit or pneumatic unit for transporting the tail part of the shrimp.

In a further embodiment of the present invention, the first and second surfaces and edges are separated either by a pivotal motion or alternatively by a translatory motion or yet alternatively by a sheer motion. When switching from the insertion mode to the separation mode, preferably one or both of the surfaces are pivoted in a rotational motion such that the edges are separated and the side of the surfaces opposite the edges remain close together. The pivotal motion will cause the head part and the tail part of the shrimp to be separated a substantial distance. The pivoting may be performed by an actuator mounted in the separation device. Preferably, an electrical actuator is used, however alternatively a hydraulic or pneumatic actuator may be used. In an alternative embodiment one or both of the surfaces may be translated in a linear motion, and in yet another alternative embodiment the two surfaces separate in a sheer motion, i.e. the two edges move in a parallel motion. The sheer motion will yield a more precise cut, if a sharp edge is used. Further, a motion being a combination of one or more of the above mentioned embodiment may be used.

In a further embodiment of the present invention, the first and second surfaces and edges are separated by moving the first surfaces and edges, or alternatively by moving the second surface and edge, or yet alternatively by moving both the first and second surfaces and edges. The first surface may remain still and the second may move, or vice versa, or both surfaces may move simultaneously in opposite directions. Preferably, however, the surface facing the tail part of the shrimp remains stationary and the surface facing the head part of the shrimp moves to allow the head to be propelled a distance apart from the separation device. In some embodiments the head may be propelled a substantial distance from the location of the separation device, e.g. the head part may even be ejected off the working surface and subsequently collected for disposal.

In a further embodiment of the present invention the method further comprising providing a sorting station located downstream the working surface, and optionally a packing station located downstream the sorting station. The digital representation of the shrimp may be used to determine the size of the tail part of the shrimp. This information may be used to sort the tail part of the shrimp into one of several size ranges after the shrimp has been separated into a head part and a tail part. Separating the body part of the shrimp according to size may simplify the subsequent packaging of the shrimp. Also, different size of shrimp may have a different sales price. Optionally, a packing station may be provided downstream in relation to the sorting station or alternatively as a part of the sorting station. A multitude of additional treatment stations may be contemplated downstream and upstream in relation to the sorting station.

The above need and the above object together with numerous other objects and features will be evident from the below detailed description of a system according to a second aspect of the present invention for preparing a shrimp, the shrimp defining a head part, a tail part and a transition between the head and tail parts, the processing station comprising:
a working surface being a substantially flat and horizontal surface for receiving the shrimp,
an optical measurement unit located above the working surface for generating a digital representation of the shrimp on the working surface,
a separation device being movably located above the working surface having a first separation surface and a second separation surface, the first and second separation surfaces defining a first edge and second edge, respectively, the first and second edges being parallel in relation to the working surface, the separation device defining:
   an insertion mode in which the first and second edges are positioned juxtaposed in relation to each other and the first and second separation surfaces are perpendicular in relation to the working surface for cutting the transition between the head and tail parts by using the first and second separation edges, and
   a separation mode in which the first and second surfaces and edges are separated for separating the head and tail parts by the first and second surfaces,
   and,
a processing unit for receiving the digital representation and for controlling the separation device for positioning the first and second separation edges above the transition between the head and tail parts.

It may be contemplated that the system described above may be used together with any of the previously described methods.

It is evident that numerous variations of the systems and methods described above may be contemplated. The invention will now be further described with reference to the figures, where:
Fig. 1a-c is a series of figures showing the steps of cutting and separating the head part from the tail part of a shrimp,
Fig. 2a-b is a series of figures showing the steps of disposing the head part of the shrimp by using a suction device, and
Fig. 3 is a processing station for preparing shrimp.

A detailed description of the figures of a first and presently preferred embodiment of the invention follows below.

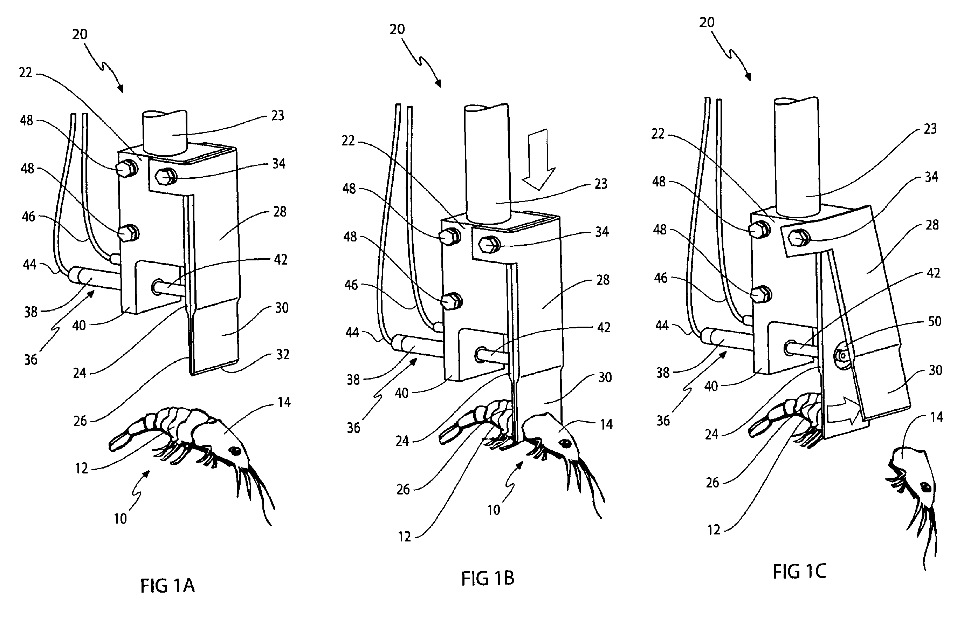

Fig. 1 a-c shows a perspective view of a processing device 20 for shrimps according to the present invention. The shrimp 10 comprises a consumable tail part 12 and a non-consumable head part 14. The tail part 12 is understood to comprise substantially all meat and as well the legs, tail fins and part of the shell of the shrimp 10. The head part 14 comprises substantially all internal and external organs of the shrimp 10 as well as part of the shell. The transition between the head part 14 and the tail part 12 is defined by a joint in the shrimp shell.

Fig. 1 a shows a perspective view of a processing device 20 positioned above a shrimp. The processing device 20 is mounted on an industrial robot (not shown) for being manoeuvrable in a working envelope defined within the space above a working surface. The processing device 20 comprises a rectangular shaped housing 22. The upper end of the housing 22 is connected to the industrial robot (not shown) by a connector 23. The front side of the housing 22 constitutes an inner plate 24, which extends downwards in relation to the housing 22. The inner plate 24 has a downwards-facing inner blade 26.

A pivotable outer plate 28 is mounted in a juxtaposed position outside the inner plate 24. The outer plate 28 has a downwards facing outer blade 30 having a juxtaposed position in relation to the inner blade 26 to form a common separation edge 32 which define the insertion mode shown in Fig. 1 a. The outer plate is pivotable around a pivot axis defined by the bolt 34. The pivoting is controlled by an actuator 36. The actuator 36 comprises a pneumatic cylinder 38, which is attached to a rear part 40 extending downwards from the rear wall of the housing 22. The pneumatic cylinder 38 has a piston 42, which is connected to the outer plate 28 via a hole 50 (not shown in the present perspective) in the inner plate 24.

The pneumatic cylinder 38 has a first pneumatic line 44 and a second pneumatic line 46 connected to opposite ends of the pneumatic cylinder 38. By providing a pressure fluid to the first pneumatic line 44 the piston 42 is forced in a direction out of the pneumatic cylinder 38 and the piston 42 will thus act on the outer plate 28 to pivot the outer plate 28 for the processing device 20 to assume the separation mode, which will be further described in Fig. 1 c. By providing pressure fluid to the second pneumatic line 46 the piston 42 and the outer plate 28 is forced in a direction into the pneumatic cylinder 38 and the processing device 20 will thus assume the insertion mode. In the insertion mode the outer plate 28 and the outer blade 30 will assume a juxtaposed position in relation to the inner plate 24 and the inner blade 26, respectively. In the separation mode the outer plate 28 and the outer blade 30 will be pivoted in relation to the inner plate 24 and the inner blade 26.

The processing device is preferably made of a metal suitable for handling food products such as stainless steel or the like. The pressure fluid is preferably compressed air. A valve (not shown) controls the supply of pressure fluid. To nuts 48 are used to assemble the housing 22. The connector 23 is preferably part of a pneumatic or hydraulic device for lowering and elevating the processing device 20.

In Fig. 1a the processing device is shown in a position above the shrimp 20 such that the separation edge 32 is positioned directly above and aligned with the transition between the tail part 12 and the head part 14 of the shrimp 10. The processing device 20 is shown in the insertion mode.

Fig. 1b shows a perspective view of a processing device 20 in a position where the separation edge 32 of the inner blade 30 and the outer blade 26 has severed the transition between the tail part 12 and the head part 14 of the shrimp 10. The severing is made by lowering the processing device 20 in the direction of the arrow shown in Fig. 1b. The processing device 20 is lowered by a pneumatic or hydraulic actuator on the industrial robot (not shown). Alternatively, the processing device 20 constitutes a part of the industrial robot (not shown). The outer plate 28 remains in the insertion mode during the severing.

The separation edge 32 is made blunt, i.e. the separation edge 32 does not cut the transition between the tail part 12 and the head part 14 of the shrimp 10, but merely disassembles the joint in the shell constituting the transition between the tail part 12 and the head part 14. Since the shell of most species of shrimp is very hard, it is not suitable to cut using a sharp edge. A sharp edge will easily get damaged and dull from the hard shell of the shrimp 10. The blunt edge may have an area of e.g. 0.5 mm-2 mm for providing enough rigidity for not breaking or get damaged by the hard shell of the shrimp 10. The separation edge 32 must not necessarily make contact with the working surface since it is sufficient that the separation edge 32 penetrates about 25%-50% into the shrimp 10 to have a correct position before the separation mode.

Fig. 1c shows a perspective view of a processing device 20 during separation of the head part 14 and the tail part 12 of the shrimp 10. After penetrating the transition between the head part 14 and the tail part 12 of the shrimp 10 the head part 14 is separated from the tail part 12 by operating the actuator 36 to cause the outer plate 28, and the attached outer blade 30, to pivot outwards, i.e. for the processing device 20 to assume the separation mode. The pivoting direction is shown by the arrow in Fig. 1 c. In the present perspective view the hole 50 in the inner plate 24 is visible. The hole 50 allows the piston to reach through the inner plate 24 and act on the outer plate 28.

When the processing device 20 enters the separation mode the outer blade 30 will subject the head part 14 to a force and the inner blade 26 will thereby subject the tail part 12 to a oppositely directed counter-force. The head part 14 and the tail part 12 are thereby pulled apart. The above method of separation is comparable to the second manual method described in the introduction.

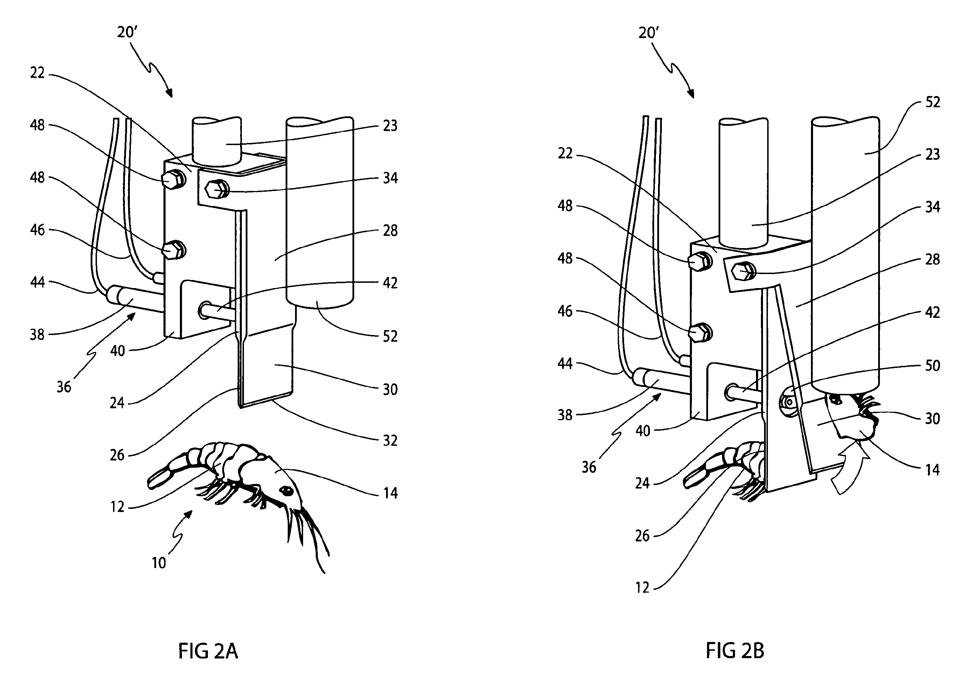

Fig. 2a shows a perspective view of a processing device 20' having an attached suction tube 52. The suction tube 52 is mounted on the outer plate 28 above the outer blade 30. The suction tube 52 is made of a light and flexible material such as plastics. The diameter of the suction tube 52 is slightly larger than the size of the head part 14 of the shrimp 10. The suction tube 52 has an open end just above the outer blade 28 and leads to a low pressure source, not shown but well known in the art. The low pressure source is used for providing a strong airflow into the suction tube. The low pressure source may be a vacuum pump or similar.

Fig. 2b shows a perspective view of the processing device 20' while in the separations mode. When the head part 14 of the shrimp 10 has been separated, the head part 14 is subjected to the airflow into the suction tube 52, and the head part 14 will, consequently, be sucked into the suction tube 52 by the strong airflow. The suction tube 52 leads to a filter (not shown), where the head part 14 of the shrimp 10 is separated from the airflow and disposed. Alternatively, a mechanical gripping unit may be used for disposing the head part 14, i.e. the head part 14 may be gripped and transported away from the tail part 12. Yet alternatively, pressurized air may be used to push the head part 14 away from the body part 12.

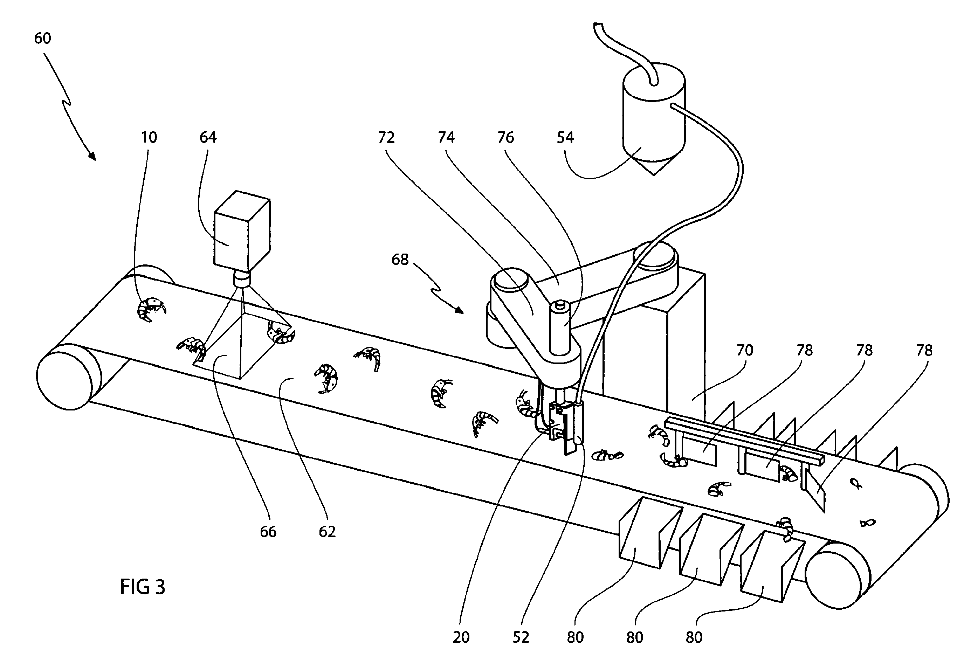

Fig. 3 shows a processing station 60 comprising a conveyor belt 62. The conveyor belt is either made of strong, but flexible rubber or as a piecewise structure such as a conveyor chain of plastic or metal plates. The shrimps 10 are put on the conveyor belt 62 at the initial position A and transported towards the end position B in a specific velocity. The shrimps 10 should be put on the conveyor belt in one layer and having a distance between each shrimp 10. The shrimps 10 may be put on the conveyer belt 62 either manually, or automatically by the use of a bulk elevator or the like.

A camera unit 64 is positioned above the conveyor belt 62. The camera unit 64 comprises a digital camera such as a CCD camera. The camera unit is aimed towards a monitored area 66 of the conveyor belt 62. The monitored area 66 constitutes an area defined by a part of the length of the conveyor belt 62 between A and B and the full width of the conveyor belt 62. In the monitored area 66 each shrimp 10 is electronically reproduced as a digital representation and fed to a processing unit such as a PC running a graphic recognition algorithm. The graphic recognition algorithm analyses the shell structure of the digital representation of the shrimp 10 and determines the position and orientation of the transition between the head part 14 and the tail part 12 of the shrimp 10. The position and orientation of the transition between the head part 14 and the tail part 16 registered in relation to the conveyor belt 62. The position and orientation of the transition between the head part 14 and the tail part 12 is stored in a memory module within the camera unit 64.

An industrial robot 68 is located downstream in relation to the monitored area 66. The industrial robot 68 comprises a base part 70 located beside the conveyor belt 62. The base part 70 has a rotationally attached first arm 74, and the first arm 74 has a rotationally attached second arm 72 for providing a 2 dimensional degree of freedom. The first arm 74 and the second arm 72 are oriented towards the conveyor belt 62 for allowing a working envelope over the whole width and some of the length of the conveyor belt 62. The end of the second arm 72 comprises a hydraulic actuator 76, which has the separation device 20 attached. The separation device 20, which has been previously described in connection with Figs 1 and 2, is movable in a horizontal direction and in a rotational direction by use of the hydraulic actuator 76.

By determining the velocity of the conveyor belt 60, the exact time when a specific shrimp is within reach of the separation device 20 may be calculated. The industrial robot will then position itself such that the separation edge 32 of the separation device 20 is positioned above and aligned with the transition between the head part 14 and the tail part 12. Subsequently, the separation device 20 is lowered and the head part 14 and the tail part 12 of the shrimp 10 are separated as described above in Fig. 1 c. The head part is sucked into the suction tube 52 by the airflow and proceeds to the head disposal device 54. The head disposal device 54 comprises a container and a filter for separating the head part 14 from the airflow. The head part is collected at the bottom of the head disposal device 54 and subsequently disposed by opening the bottom part of the head disposal device 54 and collecting the content of the head disposal device 54 into a waste container. The head disposal device 54 is connected to a low pressure source such as vacuum pump or the like.

After the head part has been separated and disposed into the suction device 52, the tail part 12 of the shrimp proceeds to a sorting station 78. The sorting station comprises a plurality of arms acting on the conveyor belt for pushing the shrimp into any of the receptacles 80. Each receptacle 80 represents a specific shrimp size. The size of the shrimp is determined by the digital representation and the arms of the sorting station 78 moves to push the specific shrimp 10 into the receptacle corresponding to the size range of the specific shrimp 10.

From the above description it is evident that numerous variations of the above processing station exist. E.g. the separation device may be designed having a pivoting inner plate, so that the tail part of the shrimp is moved away from the head part of the shrimp. Alternatively, both plates may separate in opposite directions. Alternatively, the plates and thereby the blades may move in parallel in relation to each other providing a sheer force when separating the head part and the tail part. The conveyor belt may have a variable velocity for additional efficiency of the industrial robot. Additional industrial robots may be provided for even more efficiency. Other types of manipulation devices may be used, such as various types of industrial robots well known in the art.

Although the present technology is primarily used for processing warm water shrimps, it may be further contemplated that the systems and methods described above may be used to process product such as shellfish, other marine animals and similar products exposed to the same processing need as the above mentioned products.

List of items with reference to the figures:
- 10.: Shrimp
- 12.: Tail part (of the shrimp)
- 14.: Head part (of the shrimp)
- 20.: Processing device
- 22.: Housing
- 23.: Connector
- 24.: Inner plate
- 26.: Inner blade
- 28.: Outer plate
- 30.: Outer blade
- 32.: Separation edge
- 34.: Bolt
- 36.: Actuator
- 38.: Pneumatic cylinder
- 40.: Rear part
- 42.: Piston
- 44.: First pneumatic line
- 46.: Second pneumatic line
- 48.: Nut
- 50.: Hole
- 52.: Suction tube
- 54.: Head disposal device
- 60.: Processing station
- 62.: Conveyor belt
- 64.: Camera unit
- 66.: Monitoring area
- 68.: Industrial robot
- 70.: Base part
- 72.: Second arm
- 74.: First arm
- 76.: Hydraulic actuator
- 78.: Sorting station
- 80.: Receptacles

## Claims

1. A method of preparing a shrimp, said shrimp defining a head part, a tail part and a transition between said head and tail parts, said method comprising:
providing a working surface being a substantially flat and horizontal surface for receiving said shrimp,
providing an optical measurement unit located above said working surface for generating a digital representation of said shrimp on said working surface,
providing a separation device being movably located above said working surface having a first separation surface and a second separation surface, said first and second separation surfaces defining a first edge and second edge, respectively, said first and second edges being parallel in relation to said working surface, said separation device defining:
an insertion mode in which said first and second edges are positioned juxtaposed in relation to each other and said first and second separation surfaces are substantially perpendicular in relation to said working surface, and
a separation mode in which said first and second surfaces and edges are separated,
providing a processing unit for receiving said digital representation and for controlling said separation device,
generating said digital representation of said shrimp by using said optical measurement unit,
positioning said first and second separation edges above said transition between said head and tail parts of said shrimp on the basis of said digital representation by using said processing unit,
inserting said first and second separation edges into said transition between said head and tail parts of said shrimp while said separation device being in said insertion mode, and
separating said head and tail parts of said shrimp by changing said separation device from said insertion mode to said separation mode.

2. The method according to claim 1, wherein said first and/or second edges are blunt.

3. The method according to any of the preceding claims, wherein said working surface comprises a conveyor belt, or alternatively a rotating disc, or yet alternatively a vibration table.

4. The method according to any of the preceding claims, wherein said separation device comprises a suction device for disposing said head part by suction, or alternatively said head part is removed by a mechanical gripping unit or a pneumatic unit.

5. The method according to any of the preceding claims, wherein said first and second surfaces and edges are separated either by a pivotal motion or alternatively by a translatory motion or yet alternatively by a sheer motion.

6. The method according to any of the preceding claims, wherein said first and second surfaces and edges are separated by moving said first surfaces and edges, or alternatively by moving said second surface and edge, or yet alternatively by moving both said first and second surfaces and edges.

7. The method according to any of the preceding claims, wherein said method further comprises providing a sorting station located downstream said working surface, and optionally a packing station located downstream said sorting station.

8. A processing station for preparing a shrimp, said shrimp defining a head part, a tail part and a transition between said head and tail parts, said processing station comprising:
a working surface being a substantially flat and horizontal surface for receiving said shrimp,
an optical measurement unit located above said working surface for generating a digital representation of said shrimp on said working surface,
a separation device being movably located above said working surface having a first separation surface and a second separation surface, said first and second separation surfaces defining a first edge and second edge, respectively, said first and second edges being parallel in relation to said working surface, said separation device defining:
an insertion mode in which said first and second edges are positioned juxtaposed in relation to each other and said first and second separation surfaces are perpendicular in relation to said working surface for cutting said transition between said head and tail parts by using said first and second separation edges, and
a separation mode in which said first and second surfaces and edges are separated for separating said head and tail parts by said first and second surfaces,
and,
a processing unit for receiving said digital representation and for controlling said separation device for positioning said first and second separation edges above said transition between said head and tail parts.

9. The processing station according to claim 8, further comprising any of the features of claims 1-7.
